# FASCICULE DE BREVET EUROPEEN

(11) **EP 2 352 928 B1**
(45) Date de publication et mention de la délivrance du brevet: **01.01.2014**
(21) Numéro de dépôt: 09778862.4
(22) Date de dépôt: 08.10.2009
(51) Int. Cl.: F16B 19/00

(54) **AGRAFE DE FIXATION AVEC RONDELLE D'ÉTANCHÉITÉ**
BEFESTIGER MIT DICHTUNGSSCHEIBE
ATTACHMENT FASTENER WITH A SEALING WASHER

(30) Priorité: 07.11.2008 FR 0857573
(43) Date de publication de la demande: 10.08.2011
(73) Titulaire: A. RAYMOND ET CIE, 38000 Grenoble (FR)
(72) Inventeur: GIRAUD, Sylvain, F-38130 Echirolles (FR); MOUCHET, Steve, 38530 Chapareillan (FR)
(74) Mandataire: RACKETTE Partnerschaft Patentanwälte
(86) Numéro de dépôt international: PCT/EP2009/007210
(87) Numéro de publication internationale: WO 2010/051896

(56) Documents cités:
- EP-A- 1 895 171
- DE-U1-202006 011 702
- US-A1- 2006 099 051

## Description

L'invention concerne une agrafe de fixation, comportant un corps s'étendant selon une direction axiale avec une tête, un pied et une collerette flexible en forme de jupe interposée entre la tête et le pied, et une rondelle annulaire d'étanchéité qui est destinée à assurer une certaine étanchéité le long d'un bord périphérique de la collerette, cette rondelle d'étanchéité ayant une face inférieure orientée du côté opposé à la collerette qui présente au moins une lèvre ou un bourrelet annulaire qui forme au moins une première ligne d'étanchéité sur la face inférieure de la rondelle.

On connaît une grande variété d'agrafes de fixation destinées à fixer un élément, par exemple un panneau, un tube ou des câbles, sur un support, tel qu'une plaque ou une porte d'une machine ou d'un véhicule terrestre à moteur, en assurant une certaine étanchéité de la fixation. La fixation est réalisée en faisant passer l'agrafe de fixation à travers deux orifices percés respectivement dans le panneau et le support, ces orifices qui représentent aussi une ouverture par laquelle peuvent s'introduire des éléments indésirables pour le bon fonctionnement de la machine. Ces éléments indésirables peuvent être par exemple des poussières ou, ce qui est plus problématique, de l'eau ou tout autre fluide. En effet, la présence d'eau dans des mécanismes ou des machines peut amener des phénomènes de corrosion et d'usure prématurée, des problèmes de connectivité électriques, etc.

On connaît du document de brevet EP 1 895 171, une telle agrafe de fixation munie d'une tête adaptée à se monter au panneau à travers un orifice du panneau, d'un pied adapté à se monter au support à travers un orifice du support, et d'une collerette disposée à la jonction du pied et de la tête, et d'une rondelle d'étanchéité en matière plastique relativement molle surmoulée sur la périphérie de la collerette pour assurer une certaine étanchéité avec le support. La rondelle est formée de manière à avoir sur son côté inférieur deux lèvres périphériques, la lèvre interne s'étendant axialement depuis le côté inférieur de la rondelle d'une distance inférieure à celle de la lèvre externe, de sorte à pouvoir accommoder différentes épaisseurs de support entre le pied et la tête de l'agrafe de fixation. Une telle agrafe de fixation soulève un problème dû à l'accroche chimique ou mécanique entre la rondelle et l'agrafe de fixation qui doit être contrôlée très souvent lors de la réalisation industrielle de l'agrafe.

Le document de brevet US-2006099051 décrit une autre agrafe de fixation similaire à celle décrite plus haut, dans laquelle la rondelle est réalisée en matière souple et ajoutée à la collerette. La rondelle a une forme simple avec un point de contact périphérique fin et unique avec le support.

Le but de l'invention est de renforcer encore plus l'étanchéité procurée par la rondelle d'une agrafe de fixation telle que définie plus haut, et notamment l'étanchéité vis-à-vis des fluides.

A cet effet, l'invention a pour objet une agrafe de fixation, comportant un corps s'étendant selon une direction axiale avec une tête, un pied et une collerette flexible en forme de jupe interposée entre la tête et le pied, et une rondelle annulaire d'étanchéité qui est destinée à assurer une certaine étanchéité le long d'un bord périphérique de la collerette, cette rondelle d'étanchéité ayant une face inférieure orientée du côté opposé à la collerette qui présente au moins une lèvre ou un bourrelet annulaire qui forme au moins une première ligne d'étanchéité sur la face inférieure de la rondelle, caractérisée en ce que ladite rondelle d'étanchéité est agencée pour être fixée de façon amovible sur ledit bord périphérique de la collerette et comporte une face supérieure opposée à la dite face inférieure qui forme un épaulement annulaire saillant du côté de la collerette et sur lequel prend appui ledit bord périphérique de la collerette, cet épaulement annulaire formant une autre ligne d'étanchéité sur la surface supérieure de la rondelle, où
ladite face supérieure de la rondelle d'étanchéité est conformée pour définir une gorge annulaire dans laquelle s'insère ledit bord périphérique de la collerette, ledit épaulement annulaire étant formé par un bord périphérique de ladite gorge ; et
ledit bord périphérique de ladite gorge est définit par une paroi tronconique à base circulaire ou oblongue prolongée par un bourrelet annulaire en saillie par rapport à ladite paroi tronconique.

Un tel agencement permet de garantir une bonne étanchéité aux fluides. De plus, la réalisation du corps de l'agrafe de fixation et de la rondelle d'étanchéité associée est simple et ne nécessite aucun outillage spécifique, comme un moule bi-matière avec une matière rigide pour réaliser le corps de l'agrafe et une matière souple pour réaliser la rondelle d'étanchéité, ce qui permet de réduire le coût de fabrication global de l'agrafe de fixation.

Un avantage particulier de la rondelle d'étanchéité selon l'invention est de cumuler deux effets de compression, à la fois de la collerette flexible sur la face supérieure de la rondelle et des bourrelets de la rondelle sur le support, qui permettent d'obtenir une parfaite étanchéité entre l'agrafe de fixation et le support. La collerette déformable permet une bonne adhésion et un effort constant sur la face supérieure de la rondelle tout autour de la périphérie de la rondelle. Les deux bourrelets annulaires concentriques de la rondelle d'étanchéité constituent deux lignes d'étanchéité qui permettent de piéger des fluides qui pourraient s'introduire entre le support et la rondelle.

L'agrafe selon l'invention trouve à s'appliquer en particulier mais non exclusivement pour la fixation d'un élément sur un support. En position fixée, la tête de l'agrafe est fixée sur ledit élément, et la rondelle est enserrée entre la collerette et le support, la coopération de la collerette déformable généralement tronconique et de la rondelle conférant à l'assemblage une excellente étanchéité. En outre, cette solution d'étanchéité est adaptable à tous types d'agrafes de fixation possédant un élément ou collerette déformable.

L'agrafe de fixation selon l'invention peut présenter les caractéristiques suivantes :
- ledit bourrelet annulaire en saillie par rapport à ladite paroi tronconique a une surface arrondie ;
- ladite rondelle d'étanchéité a un bord périphérique extérieur qui définit des crans de blocage en position pour la collerette ;
- la rondelle d'étanchéité a une face inférieure qui s'étend essentiellement dans un plan perpendiculaire à ladite direction axiale ;
- la gorge annulaire a un fond qui est positionné en projection axiale sensiblement entre deux lèvres ou bourrelets annulaires concentriques de la face inférieure de la rondelle d'étanchéité ;
- le corps de l'agrafe, la collerette et la rondelle d'étanchéité ont respectivement une section circulaire ;
- le corps de l'agrafe, la collerette et la rondelle d'étanchéité ont respectivement une section oblongue ;
- le corps est réalisé par moulage d'une première matière plastique, la rondelle d'étanchéité est réalisée par moulage d'une seconde matière plastique plus souple que la première matière plastique ;
- la seconde matière plastique constituant la rondelle d'étanchéité est un élastomère.

L'invention s'étend à une agrafe de fixation dont la tête est à clipsage, à lanière crantée, à enrubannage, ou autre moyen de fixation, pour la fixation de câbles électriques, tubes de conduite ou autres éléments à fixer sur un support muni d'un orifice.

L'invention sera encore mieux comprise à la lecture de la description qui suit et qui est illustrée par les dessins dans lesquels :
la figure 1 est une vue en coupe longitudinale selon la ligne I-I de la figure 2 d'une agrafe de fixation selon l'invention avec une rondelle d'étanchéité;
la figure 2 est une vue de face de l'agrafe de fixation de la figure 1 sans rondelle d'étanchéité ;
la figure 3 est une vue de face d'une autre agrafe de fixation sans rondelle d'étanchéité;
la figure 4 est une vue de face en coupe longitudinale partielle d'encore une autre agrafe de fixation avec rondelle d'étanchéité;
la figure 5 est une vue en perspective d'une rondelle d'étanchéité pour agrafe de fixation;
la figure 6 est une vue en coupe longitudinale de la rondelle d'étanchéité de la figure 5.

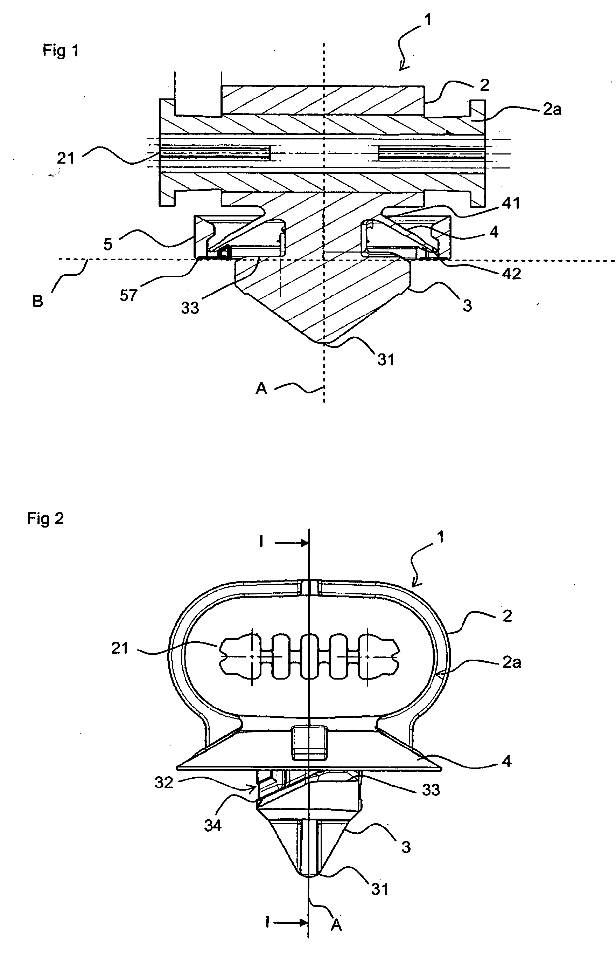

Sur la figure 1, on a représenté une agrafe de fixation d'un élément (non représenté) à un support (non représenté) de type plaque, qui comporte un corps 1 en une première matière plastique moulée relativement rigide s'étendant selon une direction axiale A, le corps 1 étant muni d'une tête 2, d'un pied 3 et d'une collerette 4 flexible en forme de jupe interposée entre la tête 2 et le pied 3. Cette première matière plastique est choisie de sorte que la collerette 4 soit flexible et déformable et dans le même temps le corps 1 rigide, par exemple un matériau thermoplastique injectable dans un moule d'injection, par exemple de type polyamide.

L'agrafe de fixation comporte aussi une rondelle annulaire d'étanchéité 5, amovible, destinée à assurer une certaine étanchéité le long d'un bord périphérique 42 de la collerette 4. La rondelle d'étanchéité 5 est réalisée en une seconde matière plastique moulée relativement souple, c'est-à-dire beaucoup plus molle que la première matière plastique constituant le corps 1 de l'agrafe, par exemple un élastomère injectable dans un moule d'injection ou tout autre matériau souple par rapport à la première matière plastique, par exemple de type caoutchouc.

La tête 2 de l'agrafe de fixation forme un dispositif de fixation 2a d'un élément sur l'agrafe. Comme représenté sur les figures 1 et 2, ce dispositif de fixation 2a se présente ici dans un premier mode de réalisation sous la forme d'une goupille 21 pouvant coulisser de manière transversale et destinée à recevoir une vis (non montrée) qui pourra fixer ledit élément sur l'agrafe de fixation. La goupille 21 peut être conçue pour recevoir une vis pour matériau souple ou tendre apte à réaliser elle-même le taraudage de la goupille 21 lors de son vissage dans la tête 2.

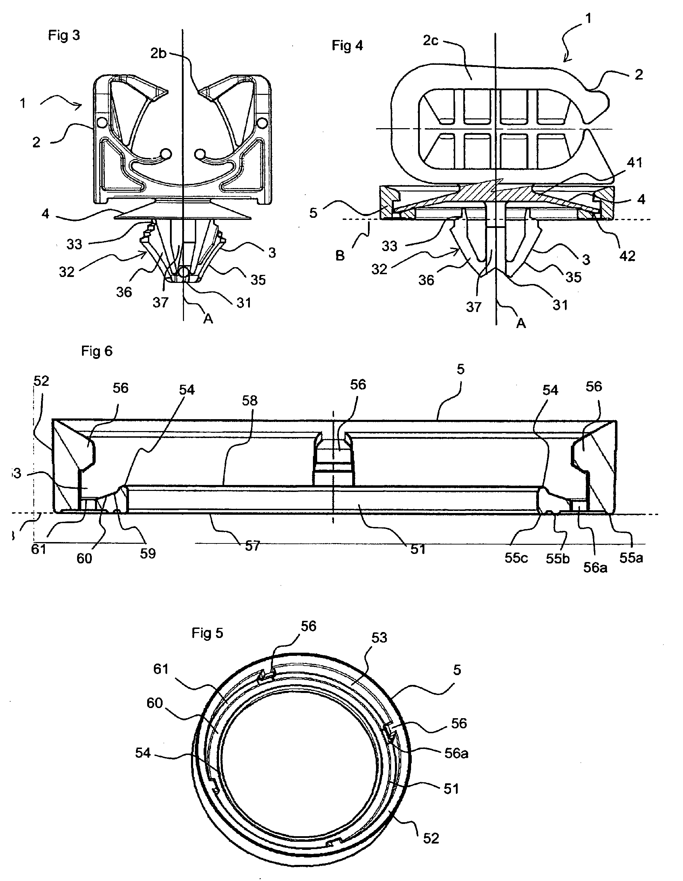

On comprendra que d'autres modes de réalisation de la tête 2 de l'agrafe de fixation selon l'invention sont envisageables pour fixer divers types d'élément sur l'agrafe avec un dispositif de fixation approprié. La tête 2 peut ainsi être munie par exemple d'un support de tube en forme de lyre 2b tel que représenté sur la figure 3, ou d'un dispositif de fixation 2c de type connecteur électrique représenté sur la figure 4, ou encore d'une lanière de fixation (non représentée).

Le pied 3 forme un système de fixation 32 de l'agrafe sur son support et est muni d'une surface d'appui 33 sur lequel repose une face du support afin de compresser la collerette 4 contre l'autre face du support et réaliser une certaine étanchéité, contre les poussières notamment. La surface d'appui 33 ainsi que le système de fixation 32 peuvent être de forme variable selon l'utilisation de l'agrafe de fixation.

Par exemple, dans le mode de réalisation de l'agrafe de fixation représenté sur les figures 1 et 2, le pied 3 est muni d'un système de fixation 32 appelé « système quart de tour » comprenant au moins une pente 34 inclinée apte à guider le support jusqu'à la surface d'appui 33. Dans ce cas, le pied 3 est composé d'une âme centrale à section sensiblement rectangulaire et avec une extrémité 31 de forme sensiblement conique destinée à faciliter l'insertion du pied 3 dans un orifice du support de forme oblongue.

Pour monter le pied 3 sur le support, on insère le pied 3 dans l'orifice du support et on tourne le pied 3 d'un quart de tour. Les pentes 34 permettent de guider le support jusqu'à la surface d'appui 33 du pied 3 et aident ainsi à la compression de la collerette 4 contre le support. Par cette rotation d'un quart de tour, on crée un écrasement important de la collerette 4 qui vient en contact sur toute sa périphérie sur le support.

On comprendra que d'autres modes de réalisation du pied 3 de l'agrafe de fixation selon l'invention sont envisageables avec divers systèmes de fixation 32. Comme on peut le voir sur les figures 3 et 4, le pied 3 peut être réalisé sous la forme d'une ancre 35 comprenant une âme 37 centrale et deux jambes 36 déformables élastiquement formant une surface d'appui 33 à plusieurs niveaux, sur lesquelles on impose un effort axial relativement important pour comprimer la collerette 4 contre le support.

La collerette 4 se présente sous la forme d'une jupe avec une paroi tronconique qui saille depuis un bord 41 de la collerette 4 lié au corps 1 de l'agrafe et s'évase ou s'élargit vers son bord périphérique 42 libre en direction du pied 3 de l'agrafe. L'épaisseur de la paroi tronconique 4 est plus importante à son bord 41 lié à l'agrafe qu'à son bord périphérique 42, ce qui apporte une souplesse et une flexibilité à la collerette 4 lui permettant de se déformer grâce à sa propre géométrie ou caractéristique mécanique, afin de mieux rentrer en contact avec la rondelle 5. La collerette 4 assure ainsi une bonne étanchéité vis-à-vis des poussières. La collerette 4 peut avoir une section circulaire ou oblongue adaptée au corps 1 de l'agrafe de fixation, selon l'application de l'agrafe de fixation.

La rondelle d'étanchéité 5 forme, comme on peut mieux le voir sur la figure 5, un anneau ayant une paroi annulaire 51 de section circulaire ou oblongue complémentaire à la forme de la collerette 4 qui vient s'insérer ou se clipser sur le bord périphérique 42 de la collerette 4, en s'enfilant par le pied 3.

Une face inférieure 57 de la paroi annulaire 51 orientée du côté opposé à la collerette 4 est destinée à venir en appui contre le support et est munie d'ici trois lèvres ou bourrelets annulaires concentriques 55a,55b,55c, dont les extrémités libres respectives sont situées dans un même plan radial B sensiblement perpendiculaire à la direction A, comme cela est mieux visible sur la figure 6, de sorte à former trois lignes concentriques d'étanchéité. Un premier bourrelet 55a est ici disposé sur la périphérie externe de la face inférieure 57 de la rondelle 5 d'étanchéité de sorte à réaliser un premier contact ou ligne d'étanchéité entre le support et la rondelle 5. Un deuxième bourrelet 55c, le plus éloigné du premier bourrelet 55a, est disposé sur la périphérie interne de la face inférieure 57 de la paroi annulaire 51 afin de réaliser une deuxième ligne d'étanchéité entre le support et la rondelle 5. Un troisième bourrelet 55b est disposé entre le premier et le deuxième bourrelet 55a,55c et forme une troisième ligne d'étanchéité entre le support et la rondelle 5. Les trois bourrelets 55a,55b,55c forment ainsi deux zones de retenue entre le support et la rondelle 5 et constituent une barrière d'étanchéité efficace contre tout type de fluide, notamment des fluides sous pression.

Une face supérieure 58 de la paroi annulaire 51 opposée à la face inférieure 57 est conformée pour définir une gorge 53 dans laquelle se loge le bord périphérique 42 de la collerette 4 et comme on peut le voir sur la figure 6, la face supérieure 58 de la paroi 51 forme un épaulement annulaire 54 saillant du côté de la collerette 4 sur lequel prend appui le bord périphérique 42 de la collerette 4 de sorte à former une quatrième ligne d'étanchéité concentrique.

Plus précisément, comme visible sur la figure 6, la face supérieure 58 de la paroi 51 comprend un bord périphérique 59 défini par une paroi tronconique 60 inclinée vers le haut en direction du centre de la rondelle 5, à base circulaire ou oblongue, qui est prolongée par l'épaulement annulaire 54 ou bourrelet en saillie par rapport à la paroi tronconique 60, de sorte que la face supérieure 58 épouse la forme du bord périphérique 42 de la collerette 4.

On comprendra qu'avant la mise en place de l'agrafe de fixation entre un élément et un support, l'épaulement annulaire 54 et la face supérieure 58 ne sont pas en contact direct ou intime avec la collerette 4, mais la compression de la rondelle 5 entre le support et l'agrafe de fixation provoque un écrasement et une déformation de la collerette 4 contre la face supérieure 58 inclinée et l'épaulement annulaire 54 garantissant ainsi un très bon contact entre le bord périphérique 42 de la collerette 4 et la rondelle 5, et donc une très bonne étanchéité contre les fluides.

La gorge annulaire 53 a par ailleurs un fond 61 qui est positionné de préférence en projection axiale sensiblement entre les deux bourrelets annulaires 55a,55c les plus éloignés l'un de l'autre sur la face inférieure 57 de la rondelle d'étanchéité 5, ce qui permet notamment au bord périphérique 42 de la collerette 4 de prendre un appui stable sur le fond 61.

Les bourrelets annulaires 55a,55b,55c et l'épaulement 54 ont ici une surface légèrement arrondie, mais on comprendra qu'ils peuvent présenter toute autre forme, de type triangulaire par exemple.

Comme on peut le voir sur la figure 6, la section radiale de la rondelle 5 est pleine et présente une certaine rigidité de part sa forme géométrique qui, alliée à la souplesse du matériau utilisé pour réaliser la rondelle 5, confère à la rondelle 5 une bonne tenue et une bonne résistance aux frottements et le cas échéant au cisaillement lors de la mise en place de la rondelle 5 entre l'agrafe de fixation et le support.

La rondelle d'étanchéité 5 est maintenue sur la collerette 4 par l'intermédiaire d'au moins deux crans 56 de fixation et de blocage en position de la collerette 4, ici quatre crans 56 disposés de manière symétriques sur un bord périphérique 52 continu de la rondelle 5. Les crans 56 pourraient aussi être disposés par exemple sur des plots périphériques (non représentés) formés sur la surface supérieure 58 de la rondelle 5; le bord périphérique 52 de la rondelle 5 n'étant dans ce cas pas continu tout autour de la périphérie de la rondelle 5 mais formés par ces plots.

Dans l'exemple de réalisation de la rondelle d'étanchéité 5 représenté sur les figures 5 et 6, la section de la rondelle d'étanchéité 5, est sensiblement en forme de L avec la paroi annulaire 51 radiale formant une branche du L s'étendant dans le plan B sensiblement perpendiculaire à la direction A lorsque la rondelle 5 est insérée sur l'agrafe de fixation et le bord périphérique 52 de la rondelle 5 formant l'autre branche du L, le bord périphérique 52 étant sensiblement perpendiculaire à la paroi 51 et s'étendant dans la direction A lorsque la rondelle 5 est insérée sur l'agrafe de fixation. La paroi 51 et le bord périphérique 52 de la rondelle 5 définissent ici à leur intersection la gorge 53 annulaire dans laquelle s'insère le bord périphérique 42 de la collerette 4 et le bord 52 apporte rigidité et tenue à la rondelle.

Grâce aux crans 56, la rondelle 5 ne peut pas se détacher de l'agrafe de fixation entre le moment où l'agrafe de fixation est assemblée sur un lieu de production et le moment où un opérateur met en place l'agrafe de fixation étanche sur un lieu d'assemblage. Les crans 56 possèdent une certaine flexibilité due à la première matière plastique constituant le corps 1 de l'agrafe de fixation de la même manière que la collerette 4 et une pente d'insertion sur leur sommet destinées à faciliter l'insertion de la rondelle 5 sur la collerette 4. On notera que, si les crans 56 sont fabriqués avec la rondelle 5 par moulage par injection, les crans 56 sont alors formés au-dessus d'orifices 56a respectifs aménagés dans le fond 61 de la paroi 51 de la rondelle 5 pour faciliter le démoulage de la rondelle 5. Les crans 56 sont disposés entre les deux bourrelets annulaires 55a,55b, de sorte que, dans le cas où un élément indésirable s'introduit dans la rondelle 5 par un de ces orifices 56a, il est bloqué dans une zone de retenue entre deux lignes d'étanchéité réalisées par les bourrelets annulaires 55a,55b,55c.

Pour fixer de manière étanche une agrafe de fixation selon l'invention sur un support de type plaque à deux faces sensiblement parallèles, la rondelle 5 étant mise en place sur la collerette 4 de l'agrafe de fixation, on introduit le pied 3 de l'agrafe dans un orifice du support jusqu'à ce que la surface d'appui 33 du pied 3 repose sur une face du support, l'autre face du support venant porter sur la surface inférieure 57 de la rondelle 5. Le support comprime alors la rondelle 5 contre la collerette 4 dont la paroi périphérique 42 se déforme légèrement et se plaque de manière étanche contre l'épaulement 54 de la rondelle, les bourrelets 55a,55b,55c de la rondelle se plaquant de manière étanche contre le support.

Dans le mode de réalisation représenté sur la figure 6, la paroi annulaire 51 de la rondelle d'étanchéité 5 a un diamètre extérieur d'environ 23 mm et un diamètre intérieur d'environ 16 mm, l'épaisseur du bord périphérique 52 de la rondelle 5 étant d'environ 2,5 mm et variable selon le type d'agrafe de fixation et de collerette 4. Dans la direction axiale A, la hauteur du bord périphérique 52 de la rondelle 5 est d'environ 3,4 mm et l'épaisseur de la paroi annulaire 51 est d'environ 1,2 mm. Les bourrelets 55a,55b,55c ont une hauteur, c'est-à-dire dépassent de la surface inférieure 57 de la paroi 51, d'environ 0,15mm, cette valeur variant selon la matière plastique de la rondelle 5 et l'application de l'agrafe de fixation. La face supérieure 58 de la paroi 51 est inclinée d'environ 20° vers le haut, l'angle d'inclinaison étant adapté à la forme de la collerette 4.

## Revendications

1. Agrafe de fixation, comportant un corps (1) s'étendant selon une direction axiale (A) avec une tête (2) dans une partie supérieure de l'agrafe, un pied (3) dans une partie inférieure de l'agrafe et une collerette (4) flexible en forme de jupe interposée entre la tête (2) et le pied (3), et une rondelle annulaire d'étanchéité (5) qui est destinée à assurer une certaine étanchéité le long d'un bord périphérique (42) de la collerette (4), cette rondelle d'étanchéité (5) ayant une face inférieure (57) orientée du côté opposé à la collerette (4) qui présente au moins une lèvre ou un bourrelet (55a, 55b, 55c) annulaire qui forme au moins une première ligne d'étanchéité sur la face inférieure (57) de la rondelle (5), ladite rondelle d'étanchéité (5) étant agencée pour être fixée de façon amovible sur ledit bord périphérique (42) de la collerette (4) et comporte une face supérieure (58) opposée à la dite face inférieure (57) qui forme un épaulement annulaire (54) saillant du côté de la collerette (4) et sur lequel prend appui ledit bord périphérique (42) de la collerette (4), cet épaulement annulaire (54) formant une autre ligne d'étanchéité sur la surface supérieure (58) de la rondelle d'étanchéité (5), **caractérisée en ce que** ladite surface supérieure (58) de la rondelle d'étanchéité (5) est conformée pour définir une gorge (53) annulaire dans laquelle s'insère ledit bord périphérique (42) de la collerette (4), ledit épaulement annulaire (54) étant formé par un bord périphérique (59) de ladite gorge (53) défini par une paroi tronconique (60) à base circulaire ou oblongue prolongée par un bourrelet annulaire (54) en saillie par rapport à ladite paroi tronconique (60).

2. Agrafe de fixation selon la revendication 1, dans laquelle ledit bourrelet annulaire (54) en saillie par rapport à ladite paroi tronconique (60) a une surface arrondie.

3. Agrafe de fixation selon l'une des revendications 1 à 2, dans laquelle ladite rondelle d'étanchéité (5) a un bord périphérique extérieur (52) qui définit des crans (56) de blocage en position pour la collerette (4).

4. Agrafe de fixation selon l'une des revendications 1 à 3, dans laquelle la rondelle d'étanchéité (5) a une face inférieure (57) qui s'étend essentiellement dans un plan (8) perpendiculaire à ladite direction axiale (A).

5. Agrafe de fixation selon l'une des revendications 1 à 4, dans laquelle la gorge annulaire (53) a un fond (61) qui est positionné en projection axiale sensiblement entre deux lèvres ou bourrelets annulaires concentriques (55a,55c) de la face inférieure (57) de la rondelle d'étanchéité (5).

6. Agrafe de fixation selon l'une des revendications 1 à 5, dans laquelle le corps (1) de l'agrafe, la collerette (4) et la rondelle d'étanchéité (5) ont respectivement une section circulaire.

7. Agrafe de fixation selon l'une des revendications 1 à 5, dans laquelle le corps (1) de l'agrafe, la collerette (4) et la rondelle d'étanchéité (5) ont respectivement une section oblongue.

8. Agrafe de fixation selon l'une des revendications 1 à 7, dans laquelle le corps (1) est réalisé par moulage d'une première matière plastique, la rondelle d'étanchéité (5) est réalisée par moulage d'une seconde matière plastique plus souple que la première matière plastique.

9. Agrafe de fixation selon la revendication 8, dans laquelle la seconde matière plastique constituant la rondelle d'étanchéité (5) est un élastomère.

## Patentansprüche

1. Befestigungselement mit einem Körper (1), der sich in eine axiale Richtung (A) erstreckt, der ein Kopfteil (2) in einem oberen Teil des Elements, ein Fußteil (3) in einem unteren Teil des Elements und einen flexiblen rockförmigen Flansch (4), der zwischen dem Kopfteil (2) und dem Fußteil (3) angeordnet ist, sowie eine ringförmige Dichtungsscheibe (5) aufweist, die dazu vorgesehen ist, eine gewisse Dichte entlang eines Umfangsrands (42) des Flanschs (4) zu gewährleisten, wobei diese Dichtungsscheibe (5) eine Unterseite (57) aufweist, die in die dem Flansch (4) gegenüberliegende Richtung ausgerichtet ist und wenigstens über eine Lippe oder eine Verdickung (55a, 55b, 55c) in Ringform verfügt, die wenigstens eine erste Dichtungslinie auf der Unterseite (57) der Scheibe (5) bildet, wobei die Dichtungsscheibe (5) dazu eingerichtet ist, an dem Umfangsrand (42) des Flanschs (4) lösbar befestigt zu sein, und eine der Unterseite (57) gegenüberliegende Oberseite (58) aufweist, die eine ringförmige Schulter (54) ausbildet, die auf der Seite des Flanschs (4) vorsteht und auf der der Umfangsrand (42) des Flanschs (4) aufliegt, wobei diese ringförmige Schulter (54) eine weitere Dichtungslinie auf der oberen Oberfläche (58) der Dichtungsscheibe (5) bildet, **dadurch gekennzeichnet, dass** die obere Oberfläche (58) der Dichtungsscheibe (5) so gestaltet ist, dass sie eine ringförmige Rille (53) bildet, in die sich der Umfangsrand (42) des Flanschs (4) einfügt, wobei die ringförmige Schulter (54) durch einen Umfangsrand (59) der Rille (53) gebildet ist, der durch eine kegelstumpfartige Wand (60) mit einer runden oder länglichen Basis gebildet ist, die durch eine in Bezug auf die kegelstumpfartige Wand (60) vorstehende ringförmige Verdickung (54) verlängert ist.

2. Befestigungselement nach Anspruch 1, bei dem die in Bezug auf die kegelstumpfartige Wand (60) vorstehende ringförmige Verdickung (54) eine abgerundete Oberfläche aufweist.

3. Befestigungselement nach einem der Ansprüche 1 bis 2, bei dem die Dichtungsscheibe (5) einen äußeren Umfangsrand (52) aufweist, der Einkerbungen (56) zum Blockieren des Flanschs (4) in einer Stellung bildet.

4. Befestigungselement nach einem der Ansprüche 1 bis 3, bei dem die Dichtungsscheibe (5) eine Unterseite (57) aufweist, die sich im Wesentlichen in einer rechtwinklig zu der axialen Richtung (A) liegenden Ebene (8) erstreckt.

5. Befestigungselement nach einem der Ansprüche 1 bis 4, bei dem die ringförmige Rille (53) einen Boden (61) aufweist, der unter axialem Versatz im Wesentlichen zwischen zwei Lippen oder Verdickungen in konzentrischer Ringform (55a, 55c) der Unterseite (57) der Dichtungsscheibe (5) angeordnet ist.

6. Befestigungselement nach einem der Ansprüche 1 bis 5, bei dem der Körper (1) des Elements, der Flansch (4) und die Dichtungsscheibe (5) jeweils einen kreisförmigen Querschnitt aufweisen.

7. Befestigungselement nach einem der Ansprüche 1 bis 5, bei dem der Körper (1) des Elements, der Flansch (4) und die Dichtungsscheibe (5) jeweils einen länglichen Querschnitt aufweisen.

8. Befestigungselement nach einem der Ansprüche 1 bis 7, bei dem der Körper (1) durch Formen eines ersten Kunststoffmaterials gebildet ist und die Dichtungsscheibe (5) durch Formen eines zweiten Kunststoffmaterials gebildet ist, das elastischer als das erste Kunststoffmaterial ist.

9. Befestigungselement nach Anspruch 8, bei dem das zweite Kunststoffmaterial, das die Dichtungsscheibe (5) bildet, ein Elastomer ist.

## Claims

1. Attachment fastener, comprising a body (1) extending in an axial direction (A) with a head (2) in an upper part of the fastener, a foot (3) in a lower part of the fastener, a flexible collar (4) in the form of a skirt disposed between the head (2) and the foot (3) and an annular sealing washer (5) adapted to provide some sealing effect along a peripheral edge (42) of the collar (4), this sealing washer (5) having a lower face (57) facing away from the collar (4) having at least one annular lip or bead (55a, 55b, 55c) which forms at least a first sealing line on the lower face (57) of the washer (5), said sealing washer (5) being adapted to be removably fixed to said peripheral edge (42) of the collar (4) and having on the side opposite said lower face (57) an upper face (58) which forms an annular shoulder (54) projecting on the same side as the collar (4) and on which said peripheral edge (42) of the collar (4) bears, this annular shoulder (54) forming another sealing line on the upper surface (58) of the sealing washer (5), **characterised in that** said upper face (58) of the sealing washer (5) is shaped to define an annular groove (53) in which said peripheral edge (42) of the collar (4) is inserted, said annular shoulder (54) being formed by a peripheral edge (59) of said groove (53) defined by a frustoconical wall (60) having a circular or oblong base extended by an annular bead (54) projecting relative to said frustoconical wall (60).

2. Attachment fastener according to claim 1, wherein said annular bead (54) projecting relative to said frustoconical wall (60) has a rounded surface.

3. Attachment fastener according to either of claims 1 or 2, wherein said sealing washer (5) has an outer peripheral edge (52) which defines notches (56) for securing the collar (4) in position.

4. Attachment fastener according to any one of claims 1 to 3, wherein the sealing washer (5) has a lower face (57) which essentially lies in a plane (8) perpendicular to said axial direction (A).

5. Attachment fastener according to any one of claims 1 to 4, wherein the annular groove (53) has a bottom (61) which is positioned in substantially axial projection between two concentric annular lips or beads (55a, 55c) on the lower face (57) of the sealing washer (5).

6. Attachment fastener according to any one of claims 1 to 5, wherein the body (1) of the fastener, the collar (4) and the sealing washer (5) have respective circular sections.

7. Attachment fastener according to any one of claims 1 to 5, wherein the body (1) of the fastener, the collar (4) and the sealing washer (5) have respective oblong sections.

8. Attachment fastener according to any one of claims 1 to 7, wherein the body (1) is produced by moulding a first plastic material and the sealing washer (5) is produced by moulding a second plastic material more flexible than the first plastic material.

9. Attachment fastener according to claim 8, wherein the second plastic material constituting the sealing washer (5) is an elastomer.
